# EUROPÄISCHE PATENTANMELDUNG

(11) **EP 2 335 855 A1**
(43) Veröffentlichungstag der Anmeldung: **22.06.2011**
(21) Anmeldenummer: 09015077.2
(22) Anmeldetag: 04.12.2009
(51) Int. Cl.: B23H 9/10, B23H 9/14, C03C 11/00

(54) **Füllstoff beim Bohren von Durchgangslöchern von hohlen Bauteilen, ein Verfahren und Vorrichtung dafür**

(71) Anmelder: Siemens Aktiengesellschaft, 80333 München (DE); Chromalloy Gas Turbine LLC, Orangeburg, NY 10962 (US)
(72) Erfinder: Dorn, Wolfgang, 10587 Berlin (DE); Ladru, Francis-Jurjen, Dr., 13587 Berlin (DE); Riemann, Michael, 12309 Berlin (DE)

(57) **Zusammenfassung**

Ein neuer Füllstoff aus Glas verbessert die Absorption und die Verteilung der Energie des Strahls, so dass eine innen liegende Wand (28) des hohlen Bauteils (1, 120, 130, 155) nicht beschädigt wird.

## Beschreibung

Die Erfindung betrifft einen Füllstoff beim Bohren von hohlen Bauteilen, bei denen durch eine äußere Wand ein Durchgangsloch erzeugt wird, sowie ein Verfahren und eine Vorrichtung dafür.

Bauteile wie z. B. Turbinenschaufeln weisen Filmkühllöcher als Durchgangslöcher auf, die nach dem Gießen des Bauteils eingebracht werden.

Dazu werden Laser oder Elektronenstrahlen verwendet, um das Loch in einer äußeren Wand zu erzeugen. Bei einem hohlen Bauteil wird der Hohlraum in der Regel mit einem Material aufgefüllt, um zu verhindern, dass beim Durchschießen des Lochs am Ende des Prozesses eine innen liegende Wand zu stark geschädigt wird. Dies kann durch Auffüllen mit UV-härtbarem Material erfolgen.

Dies ist jedoch nicht immer ausreichend, z. B. wenn das Material verdampft und dann durch das Loch nach außen tritt. Außerdem ist das Material zeitaufwendig einzubringen und zu entfernen.

Es ist daher Aufgabe der Erfindung oben genanntes Problem zu lösen.

Die Aufgabe wird gelöst durch einen Füllstoff gemäß Anspruch 1, ein Verfahren gemäß Anspruch 9 und eine Vorrichtung nach Anspruch 11.

In den Unteransprüchen sind weitere vorteilhafte Maßnahmen aufgelistet, die beliebig miteinander kombiniert werden können, um weitere Vorteile zu erzielen.

Es zeigen
- Figur 1: eine Anordnung zur Durchführung des Verfahrens mit einem solchen Füllstoff,
- Figur 2: eine Turbinenschaufel,

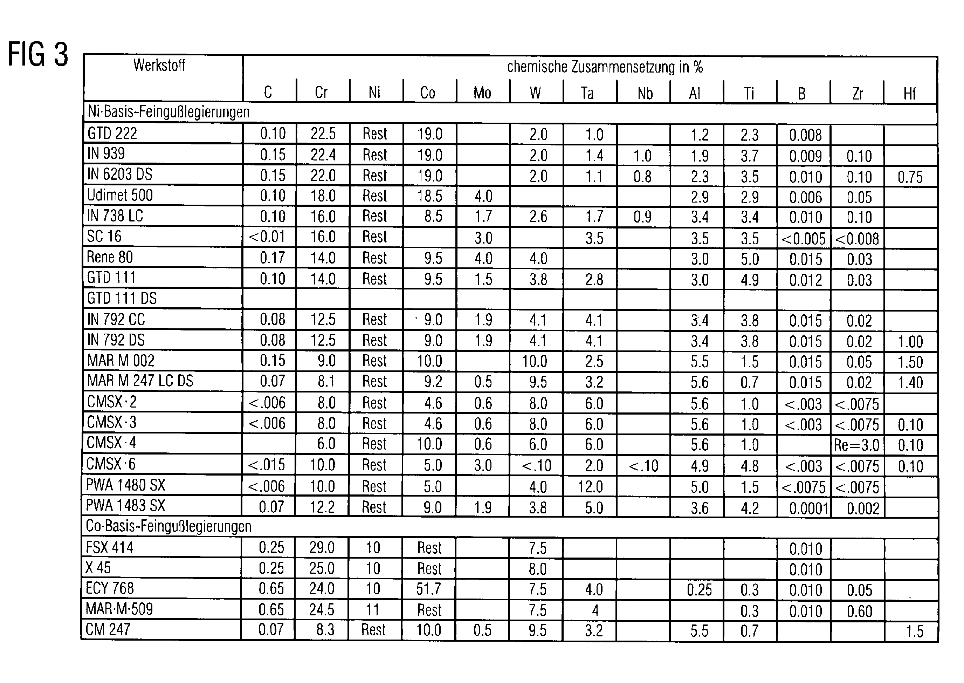

- Figur 3: eine Liste von Superlegierungen.

Die Figuren und die Beschreibung stellen nur Ausführungsbeispiele der Erfindung dar.

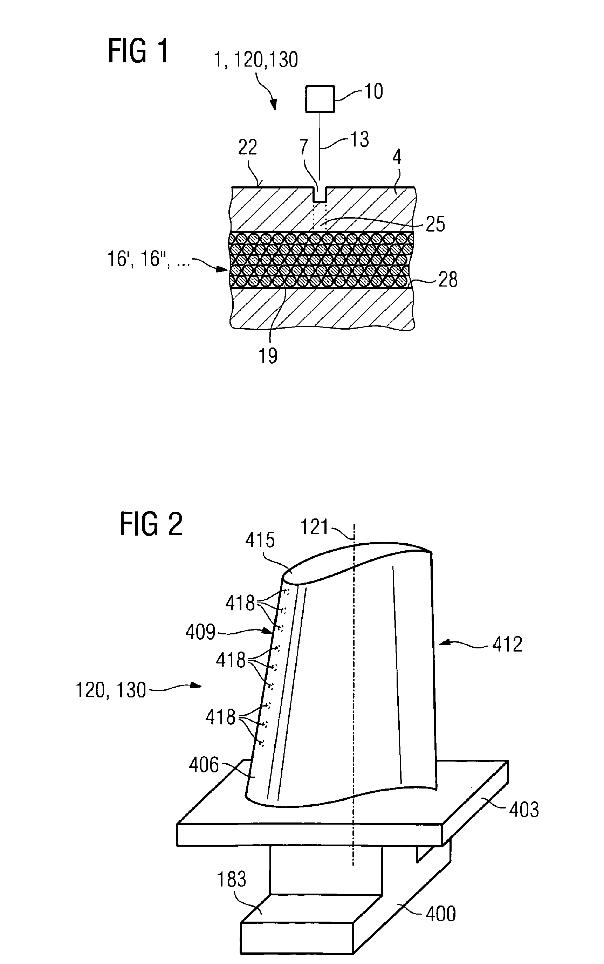

In Figur 1 ist ein Teilbereich eines Bauteils 1, 120, 130 dargestellt.

Das Bauteil 1 ist vorzugsweise eine Turbinenschaufel 120, 130, die im Inneren gekühlt wird, so dass das Bauteil 1, 120, 130 einen Hohlraum 19 aufweist.

Ausgehend von der äußeren Oberfläche 22 einer äußeren Wand 4 wird ein Loch 7 erzeugt.

Das Loch 7 soll in seinem Endstadium ein Durchgangsloch ergeben, wie es gepunktet in der Figur 1 dargestellt ist.

Zum Bohren wird vorzugsweise ein Laser 10 verwendet, der Laserstrahlen 13 aussendet, die das Material der Wand 4 zum Verdampfen bringen.

Ebenso können auch Elektronenstrahlen oder andere energiereiche Strahlen verwendet werden.

Das Problem bei dem Verfahren besteht darin, wenn der letzte Bereich 25 des Durchgangslochs 7 erzeugt wird, dass teilweise die Strahlen des Lasers in den Hohlraum 19 eindringen und eine gegenüberliegende Wand 28 im Hohlraum 19 schädigen können.

Dagegen wird ein Füllstoff 16', 16" , 16''' in den Hohlraum 19 eingebracht um die innen liegende Wand 28 zu schützen.

Erfindungsgemäß werden hier Kugeln 16', 16", ..., insbesondere Glaskugeln in den Hohlraum 19 eingebracht.

Der Zweck der Kugeln 16', 16", ... besteht im Absorbieren und/oder Reflektieren des Energiestrahls (Laserstrahls).

Die Glaskugeln weisen vorzugsweise einen Durchmesser ≤ 5mm auf, insbesondere ≤ 2mm, ganz insbesondere ≤ 1,2mm. Vorzugsweise können auch verschiedene Kugeldurchmesser verwendet werden, z.B. können kleinere Kugeln den Zwischenraum zwischen größeren Kugeln auffüllen, um eine höhere Packungsdichte zu erreichen.

Vorzugsweise beträgt der Durchmesser mindestens 0,1mm, insbesondere 0,3mm.

Vorzugsweise wird hier ein Silikat-Glas oder ein Beryllium-Glas verwendet.

An die Glaskugeln werden keine besonders hohen Anforderungen an Rundheit oder Oberflächenbeschaffenheit gestellt, um eine Fokussierung zu vermeiden.

Ebenso kann der Absorptionsprozess der Laserenergie oder der Energiestrahlen durch farbige, vorzugsweise grüne oder blaue Glaskugeln verbessert werden.

Trifft der Laser oder der Energiestrahl auf eine oder mehrere solcher Glaskugeln, so kommt es zum Aufspalten der Laserenergie, so dass die Energie des aufgespalteten Laserstrahls oder Verbreiterung des Laserstrahls nicht mehr ausreicht, um auf der gegenüberliegenden Wand eine Schädigung zu erzielen. Der Energiestrahl zehrt sich durch Formfehler und Oberflächenbeschaffenheit auf.

Eine Absorption der Energie erfolgt auch dadurch, wenn durch den Laserstrahl die Glaskugel massiv getroffen wird und diese zerbricht. Der dadurch frei werdende Hohlraum wird durch andere Glaskugeln, die nachrücken, aufgefüllt. Dies geschieht automatisch durch das Eigengewicht der Glaskugeln.
Die Kugeln können massiv oder porös ausgebildet sein.

Die Glaskugel oder der Rest der Glaskugeln können einfach aus dem Inneren des Bauteils 1 oder der Turbinenschaufeln 120, 130 entfernt werden, in dem man sie einfach ausschüttet oder etwas mechanisch rüttelt. Im Gegensatz zur Verwendung von Wachs oder sonstigen Materialien muss keine erneute Erwärmung und Auslaufen durch Erweichen des Füllstoffes erfolgen. Somit ist die Entfernung des Füllstoffs erheblich beschleunigt.

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12A1-0,6Y-3Re oder Ni-12Co-21Cr-11A1-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAIX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Füllstoff beim Bohren von Durchgangslöchern (7) eines hohlen Bauteils (1, 120, 130, 155),
der als absorbierende oder reflektierende Kugeln (16', 16", ...),
insbesondere als Glaskugeln,
ausgebildet ist.

2. Füllstoff nach Anspruch 1,
bei der die Glaskugeln (16', 16", ...) einen Durchmesser ≤ 5mm,
insbesondere ≤ 2mm,
ganz insbesondere ≤ 1,2mm
aufweisen.

3. Füllstoff nach Anspruch 1 oder 2,
der ein Silicat-Glas aufweist,
insbesondere daraus besteht.

4. Füllstoff nach Anspruch 1, 2 oder 3,
der ein Beryllium-Glas aufweist.

5. Füllstoff nach Anspruch 1, 2, 3 oder 4,
bei dem das Glas farbig,
insbesondere grün oder blau ist.

6. Füllstoff nach Anspruch 1, 2, 3, 4 oder 5,
dessen Kugeln (16', 16" , ...) verschiedene Durchmesser aufweisen.

7. Füllstoff nach Anspruch 1, 2, 3, 4, 5 oder 6,
dessen Kugeln (16', 16", ...) massiv ausgebildet sind.

8. Füllstoff nach Anspruch 1, 2, 3, 4, 5 oder 6,
dessen Kugeln (16', 16", ...) hohl oder porös ausgebildet sind.

9. Verfahren zum Herstellen eines Durchgangslochs (7) eines hohlen Bauteils (1, 120, 130, 155) durch eine Wand (4) des hohlen Bauteils,
bei dem ein Füllstoff nach Anspruch 1, 2, 3, 4, 5, 6, 7 oder 8 im Hohlraum (19) um das herzustellende Durchgangsloch (7) des hohlen Bauteils (1, 120, 155) angeordnet ist, und ein Energiestrahl auf den Füllstoff (16', 16" , ...) trifft.

10. Verfahren nach Anspruch 9,
bei dem ein Laser zur Herstellung des Durchgangslochs (7) verwendet wird.

11. Vorrichtung zum Laserbohren,
die aufweist:
ein Laser,
eine Haltevorrichtung für ein Bauteil (120, 130),
ein Bauteil (120, 130),
Füllstoff (16', 16" , ...) in dem Bauteil (120, 130) nach einem oder mehreren der vorherigen Ansprüche 1 bis 8.
